# EUROPEAN PATENT APPLICATION

(11) **EP 4 668 796 A1**
(43) Date of publication of application: **24.12.2025**
(21) Application number: 25181740.9
(22) Date of filing: 10.06.2025
(51) Int. Cl.: H04W 4/30, H04W 4/70, H04W 12/50, H04W 12/06

(54) **CELLULAR-BASED COMMUNICATION BETWEEN OPERATOR CONTROL UNITS (OCUS) AND MACHINE CONTROL UNITS (MCUS)**

(30) Priority: 20.06.2024 US 202463662273 P; 09.06.2025 US 202519232308
(71) Applicant: Cattron North America, Inc., Warren, OH 44483 (US)
(72) Inventor: TRAN, Gia Phuong, Warren, 44483 (US); BEAULIEU, Laurent, Warren, 44483 (US); GREGOIRE, Robert, Warren, 44483 (US); SOUHAIL, Jad, Warren, 44483 (US); VO, Khac-Duan, Warren, 44483 (US); REMETE, Victor, Warren, 44483 (US); FETTE, Brian, Warren, 44483 (US); JOVENALL, Jeremy, Warren, 44483 (US)
(74) Representative: Lind Edlund Kenamets Intellectual Property AB

(57) **Abstract**

The present disclosure generally relates to cellular-based communication between operator control units (OCUs) and machine control units (MCUs), such as a locomotive control unit and other industrial machine control units.

## Description

### FIELD

The present disclosure generally relates to cellular-based communication between operator control units (OCUs) and machine control units (MCUs), such as a locomotive control unit and other industrial machine control units.

### BACKGROUND

This section provides background information related to the present disclosure which is not necessarily prior art.

A locomotive may include a locomotive control unit (LCU) configured to control one or more operations of the locomotive, including starting, stopping, speed, braking, switching, *etc.* An operator may use an operator control unit (OCU) to remotely control the locomotive by sending commands, instructions, *etc.* from the OCU to the LCU via a radio frequency (RF) wireless network.

### DRAWINGS

The drawings described herein are for illustrative purposes only of selected embodiments and not all possible implementations and are not intended to limit the scope of the present disclosure.
FIG. 1 illustrates an example system for cellular-based communications between an operator control unit (OCU) and a locomotive control unit (LCU) (broadly, a machine control unit (MCU)) according to an exemplary embodiment of the present disclosure.
FIG. 2 illustrates example technical architecture that may be used in the system shown in FIG. 1 according to an exemplary embodiment of the present disclosure.
FIG. 3 illustrates an example usage of the system shown in FIGS. 1 and 2 according to an exemplary embodiment of the present disclosure.
FIG. 4 includes example testing results for the system shown in FIG. 1 including latency of 250 milliseconds (ms) to 300 ms and end-to-end packet delivery rate greater than 99.4%.

Corresponding reference numerals may indicate corresponding (but not necessarily identical) parts throughout the several views of the drawings.

### DETAILED DESCRIPTION

Example embodiments will now be described more fully with reference to the accompanying drawings.

An operator control unit (OCU) may be used to remotely control a locomotive (broadly, an industrial machine) by sending commands, instructions, *etc.* from the OCU to a locomotive control unit (LCU) (broadly, a machine control unit MCU)) via a radio frequency (RF) wireless network. The OCU may comprise a subG radio module. But as recognized herein, the subG radios modules associated with conventional OCUs may have only a limited range and limited encryption.

After recognizing the above, exemplary embodiments of systems were developed and/or are disclosed herein for cellular-based communications between operator control units (OCUs) and machine control units (MCUs). The systems disclosed herein may be used for remotely controlling an industrial machine, such as a locomotive, via an OCU communicating with a machine control unit *(e.g.,* LCU onboard a locomotive, *etc.)* over a cellular network.

By comparison to some conventional OCU-MCU communication systems, the exemplary systems and methods disclosed herein may advantageously provide one or more (but not necessarily any or all) of the following cellular-based remote control enhancements:
- expanded remote control range;
- more flexibility with robust security *(e.g.,* point to point link encryption, *etc*.);
- higher bandwidth *(e.g.,* long-term evolution (LTE), *etc*.);
- improved/less network latency (*e.*g., latency of about 200 milliseconds (ms) to 300 ms, latency of about 250 milliseconds (ms) to 300 ms, *etc*.);
- the ability to monitor the RF packet exchange through a back-office application server; and/or
- do not have bandwidth limitations to the extent there are sub-gig bands, which allows more systems to be online within RF range of each other without interfering with each other.

In exemplary embodiments, remote control locomotive (RCL) communication occurs via either: cellular communication alone that links the LCU to one or more OCUs paired with the LCU; or cellular and an existing RF protocol work in parallel to provide an improved uptime. Encryption and security are drastically improved over existing UHF or VHF communication protocols. This technology also permits enhanced authentication with the back-office application server.

With the improved bandwidth afforded by the cellular link in exemplary embodiments disclosed herein, the OCU can potentially send internal logs over the air without sacrificing bandwidth that would be used for control messages. Alternately or additionally, the increased bandwidth through the cellular channel can be used to stream data to the OCU without sacrificing bandwidth for feedback messages. The streaming data that may be sent over the cellular link may include one or more of:
- a live video stream of a location critical to the current movement;
- data maps for local dynamic conditions that are of interest to the remote control operator (RCO);
- switch list updates, car numbers for coupling or uncoupling; and/or
- dynamic movement instructions that would obviate the need for static switch lists.

Also, the back-office application server could use the cellular link to send dynamically updating data to the MCU *(e.g.,* LCU, *etc.)* such as:
- updated maps for various features;
- overriding stop commands;
- tonnage, cut list, switch list, *etc.;* and/or
- control of a potentially distant RCL system from a remote location.

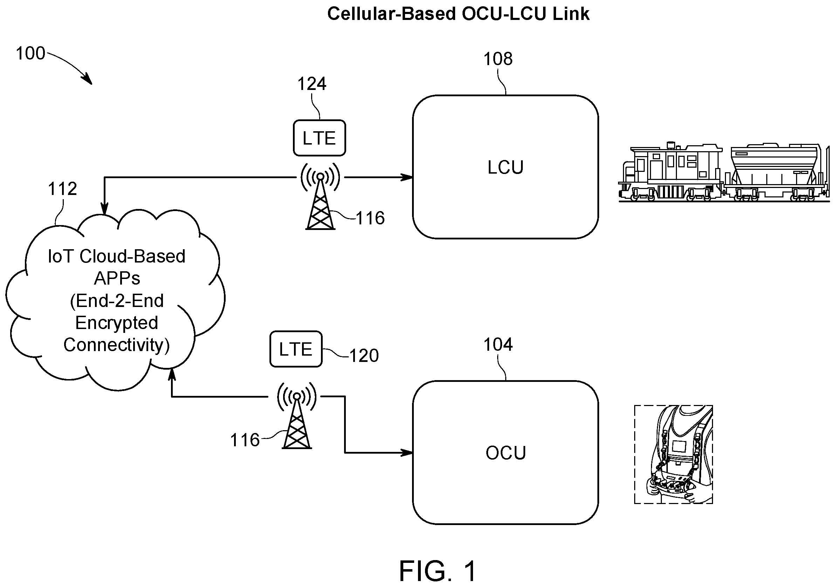

With reference now to the figures, FIG. 1 illustrates an example system 100 for cellular-based communications between an operator control unit (OCU) 104 and a locomotive control unit (LCU) 108 (broadly, a machine control unit (MCU)) according to an exemplary embodiment of the present disclosure.

The system 100 is configured such that the OCU 104 and LCU 108 are able to communicate with each other via a cellular network 116 through a series of IOT cloud-based applications 112 with end-to-end encrypted connectivity and data integration tools (*e.g*., managed by the vendor or clients themselves, *etc.).* The cellular network 116 includes an LTE communication link 120 through which the OCU 104 communicates with the cloud-based services 112 and an LTE communication link 124 through which the LCU 108 communicates with the cloud-based services 112.

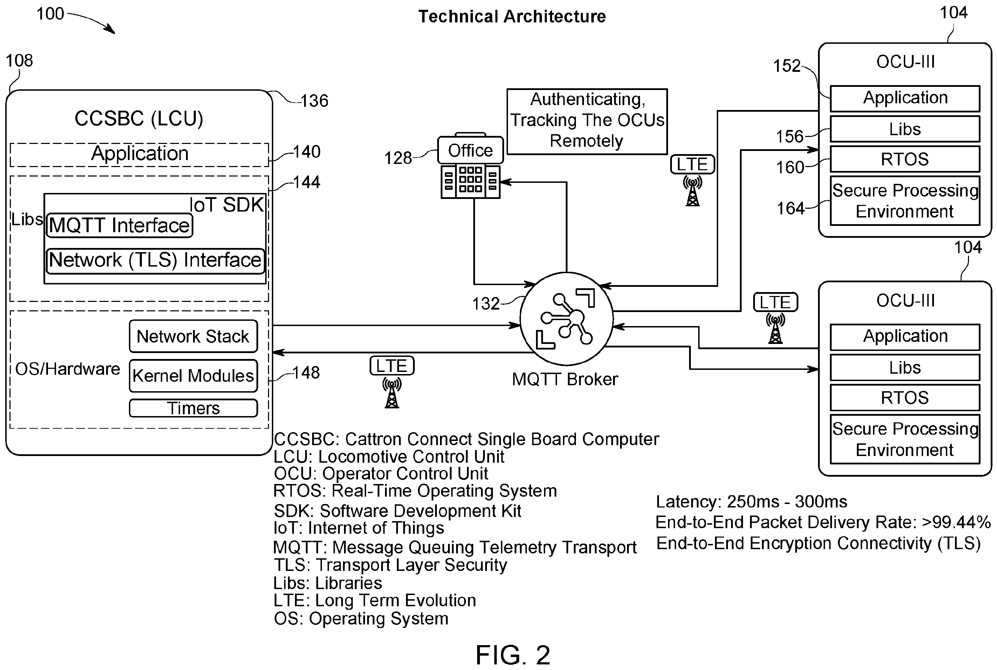

FIG. 2 illustrates example technical architecture that may be used in the system 100 shown in FIG. 1 according to an exemplary embodiment of the present disclosure. In this exemplary embodiment, the system's latency was 250 milliseconds (ms) to 300 ms and end-to-end packet delivery rate was greater than 99.4%. The system 100 was also built with end-to-end encryption connectivity, which may be based on the latest transport layer security (TLS) revision 1.3.

In other exemplary embodiments, the system may be configured to be operable with a network latency of about 200 milliseconds to about 300 milliseconds and with an end-to-end packet delivery rate greater than about 99.4%. For example, the system may reach a latency of about 200 milliseconds when the system is operating in a good coverage area and less network traffic.

As shown in FIG. 2, the system 100 includes a back-office application server 128 for authenticating and tracking the OCUs 104 remotely. The system 100 further includes a Message Queuing Telemetry Transport (MQTT) broker 132. The MQTT broker 132 is configured to be operable as a central hub or intermediary that enables or handles the flow of messages between the OCUs 104 and the LCU 108.

With continued reference to FIG. 2, the LCU 108 includes a Cattron Connect Single Board Computer (CCSBC) 136. The single computer board 136 includes an Application 140, Libraries (Libs) 144, and Operating System (OS)/Hardware 148. The LCU's Libraries 136 includes an Internet of Things (IOT) Software Development Kit (SDK) comprising an MQTT Interface and Network Transport Layer Security (TLS) Interface. The OS/Hardware 148 includes a network stack, kernel modules, and timers.

Each OCU 104 includes an Application 152, Libraries 156, Real-Time Operating System (RTOS) 160, and Secure Processing Environment 164. The OCU's Libraries 156 includes an Application Event Manager (AEM) and an Internet of Things (IOT) Software Development Kit (SDK) comprising an MQTT Interface and Network Transport Layer Security (TLS) Interface. The Application Event Manager (AEM) includes a library that supports the development of consistent, modular, and event-based applications.

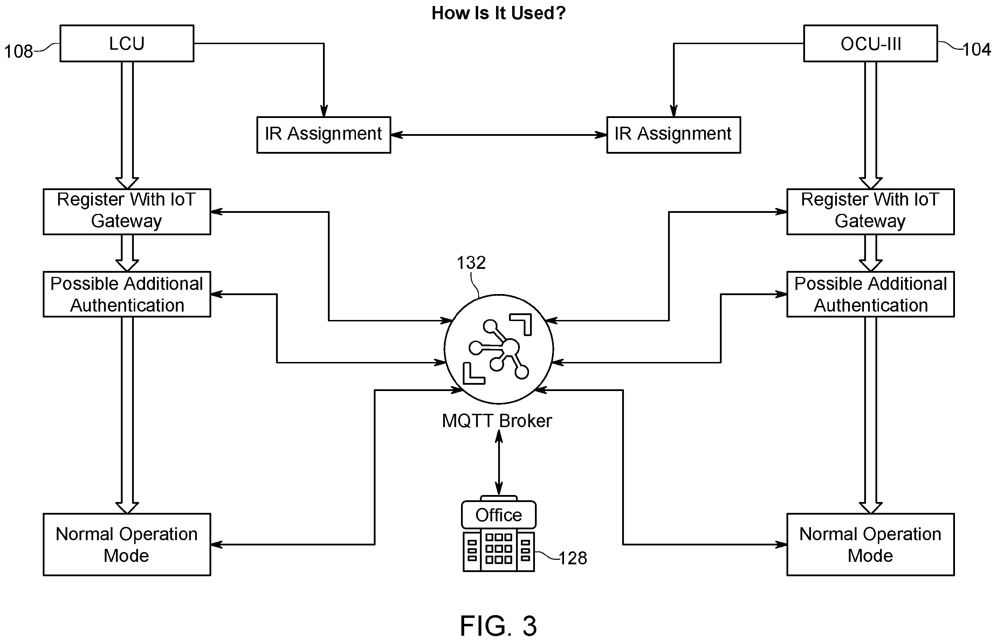

FIG. 3 illustrates an example usage of the system 100 shown in FIGS. 1 and 2 according to an exemplary embodiment of the present disclosure. Initially, the OCU 104 and LCU 108 are paired by performing Infrared (IR) Link assignment between the LCU 108 and OCU 104.

The network modules of the OCU 104 and LCU 108 are programmed before usage as follows. For the LCU 108, the Cattron Connect Single Board Computer (CCSBC) 136 is registered or provisioned with the IoT Gateway. For the OCUs 104, the LTE modules of the OCUs are registered or provisioned with the IoT Gateway. The Device Provisioning Service (DPS) may be automated to ensure the device's private keys and certificates are securely embedded.

Additional steps may be implemented via channels (LCU with the BackOffice Application Server and OCU with BackOffice Application Server) to enhance authentication before the operator is permitted to remotely control the locomotive via the cellular communications between the OCU and LCU.

The OCU and LCU links may then start operating as usual in a normal operating mode.

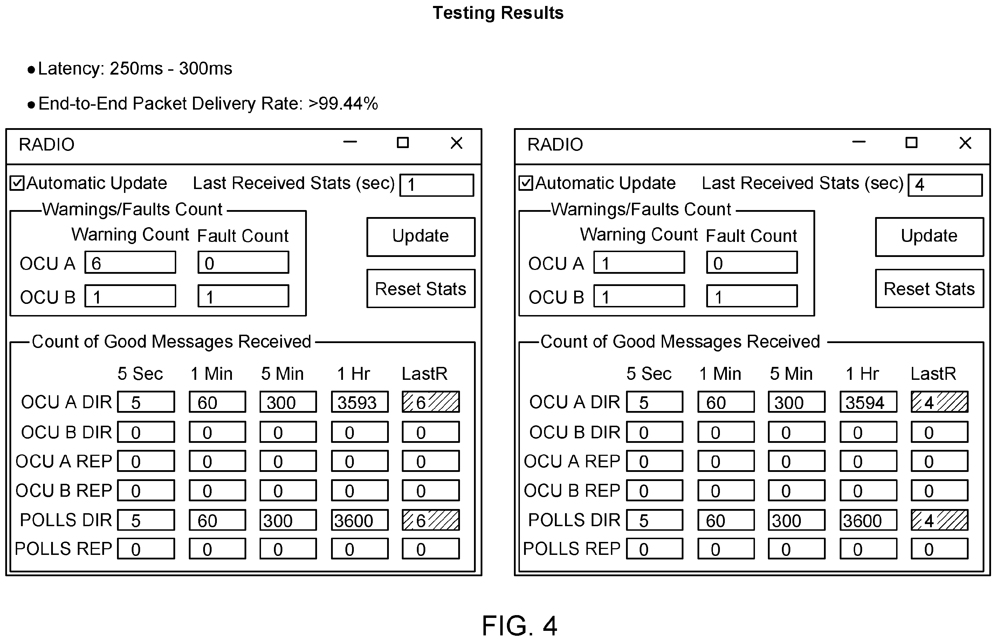

FIG. 4 includes example testing results for the system shown in FIG. 1 including latency of 250 milliseconds (ms) to 300 milliseconds and end-to-end packet delivery rate greater than 99.4%. Generally, the test results shown in FIG. 4 show the reliability of the cellular RF link and good statistics thereof, which are comparable to UHF and VHF communication. This system latency of is exceptional compared to some other existing protocols. In exemplary embodiments, the system is configured to be operable with a network latency of about 200 milliseconds to about 300 milliseconds and with an end-to-end packet delivery rate greater than about 99.4%. For example, the system may reach a latency of about 200 milliseconds when the system is operating in a good coverage area and less network traffic. In exemplary embodiments, the system is configured to be operable with a network latency of 250 milliseconds to 300 milliseconds and/or with an end-to-end packet delivery rate greater than 99.4% even when network type and/or carrier changes are outside of the control of an operator of the operator control unit and occur without operator knowledge.

Exemplary embodiments disclosed herein may provide one or more of (but not necessarily any or all of) the following advantages as compared to conventional technology.

An IoT, cloud-based computing solution may provide the following advantages:
- End-to-end data encryption connectivity: TLS, certificates;
- Publish-Subscribe model: Asynchronous and scalable messaging service;
- Low latency communication; and
- Easy to monitor, maintain, and upgrade the system remotely.

For the railroad industry:
- the remote-control systems disclosed herein works in yards and locations including where repeater infrastructure is not available;
- the size of the message exchanged between LCU and OCU can be larger, *e.g.,* up to 5K rather than 20 bytes of conventional products; and
- the back-office can fully monitor the OCU in Real-Time, such that man-down events can be triggered in real time, additional monitoring features can be implemented easily, *etc.*

Cattron OCU-III and LCS-III and the locomotive are examples only of possible OCUs, MCUs, and industrial machines that may be used in the exemplary embodiments disclosed herein. Other OCUs, MCUs, and industrial machines may be used in the disclosed systems and methods with cellular-based communications between a machine control unit (MCU) and one or more operator control units (OCUs) for remotely controlling operation of an industrial machine.

Features of the OCU-III and LCS-III are respectively described in Appendices A and B to U.S. Provisional Application No. 63/662,273, which are incorporated herein by reference in their entirety. The OCU 104 may include one or more (but not necessarily any or all) of the features of the OCU-III described in Appendix A to U.S. Provisional Application No. 63/662,273. And the LCU 108 may include one or more (but not necessarily any or all) of the features of the LCS-III described in Appendix B to U.S. Provisional Application No. 63/662,273.

In an exemplary embodiment, the OCU 104 includes the Application 152, Libraries 156, Real-Time Operating System (RTOS) 160, and Secure Processing Environment 164 as shown in FIG. 2 for cellular communication. In this example, the OCU 104 is also configured as described in Appendix A to U.S. Provisional Application No. 63/662,273:

### HIGHLIGHTS

- The OCU-III pairs with the locomotive MCU and uses infrared to download unique configuration details of the RCL system, decreasing the need to manually configure units and increasing the time that units are available for operation in the field
- The display provides visibility that allows more efficient operations. The first two lines display messages sent by the MCU with no scrolling required. The third line displays messages local to the OCU-III, such as Operator Requested Status
- Improve the efficiency of service operations and decrease downtime of control units through the BLUETOOTH interface
- Update firmware and configuration parameters over a wireless connection when connecting with a properly licensed software tool.

### FEATURES

- Lightweight, impact-resistant nylon enclosure
- An embedded GNSS enables the OCU location to be logged in the internal archive record for later review.
- OCU performance data can be downloaded from the OCU-III without additional cables or opening the unit to obtain critical service data
- Switch usage statistics recorded in the internal archive record
- An embedded accelerometer monitors OCU tilt, motion and other operations to improve operator safety
- The accelerometer is self-checked at power up and continually during operation

### OPTIONS

- Single or six-unit battery charger
- A four-bay battery analyzer is available for battery maintenance
- GPS Push Option is available for forwarding the OCU location data to the MCU
- RemoteIQ^{™} Rail cloud-based monitoring and analytics software application

In an exemplary embodiment, the LCU 108 includes the features shown in FIG. 2 for cellular communication. As disclosed above, the LCU 108 includes the single computer board 136 comprising the application 140, libraries 144, and operating system/hardware 148. The LCU's libraries 136 includes an IOT software development kit comprising an MQTT interface and network transport layer security interface. The operating system/hardware 148 includes a network stack, kernel modules, and timers. In this example, the LCU 104 is also configured as described in Appendix B to U.S. Provisional Application No. 63/662,273:

### HIGHLIGHTS

- Latest generation locomotive control system that builds upon the proven features of Accuspeed^{™} and Beltpack^{™} systems
- Technology stack supports the future possibilities of remote control and automation in the railyard
- Multimodal Feedback with talker feature and two-way RF communication
- Consistently maintains the speed selected by the operator
- Designed for rail operations throughout the Americas
- OCU-III operator control unit offers state of the art features

### FEATURES

- Dynamic speed control
- Compliant to 49 CFR § 229.15
- Compatible with CCB-26 electronic brake system
- RF protocols support operation in 450 - 470 MHz
- Uses the industry-leading, proven OCU-III operator control unit
- Reduced product footprint as system size minimizes space requirements inside the cab
- Maintenance Terminal PC Tool - provides monitoring, configuration, archive record access and maintenance information directly between a PC and the locomotive control system
- Feedback and status are sent to operators through a mix of visual feedback on the OCU and audio feedback through the cab radio
- Simplified Pitch & Catch operations
- Movement command for speed and direction feedback available to the assigned OCU(s)
- Operators have a visual indication of the LCS-III system
- GPS Push Feature update rate is improved

### OPTIONS

- Train Brake Cycle Braking Protection - a safety feature that protects against operator misuse of the train brake
- Remote Operating Parameter Programming Station - installs in locomotive cab for user interface to save cab space when implementing remote control
- Remote 4G Connectivity - permits the user to connect to the locomotive control system remotely through an internet connection
- Electric Handbrake Interface - permits the operator to set or release the electronic handbrake through the operator control unit
- Pullback and Stopping Protection (PSP) - enforces a stopping trajectory to permit automatic point protection. PSP can also optionally automate grade crossing rules
- Hump Control Options - excitation control and optional variable speed humping interface
- Snow Brake Option - applies a small amount of constant brake cylinder pressure to prevent snow and ice buildup on the brake shoes
- RemoteIQ^{™} for Rail - Cattron's asset tracking and maintenance software
- Operating range can be extended through the installation of RF repeaters

Aspects of the present disclosure should not be limited to use with only locomotives or any one specific type of industrial machine. Exemplary embodiments disclosed herein may be configured for use with various types of industrial machines for different applications and/or different markets, *etc.* For example, exemplary embodiments disclosed herein may be configured for use with cranes, overhead cranes, concrete pull behind pumps, water pumps, concrete boom trucks, automated guided vehicle (AGV) robotics, agricultural robotics, excavators, paving equipment, and other industrial machines.

Example embodiments are provided so that this disclosure will be thorough and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms, and that neither should be construed to limit the scope of the disclosure. In some example embodiments, well-known processes, well-known device structures, and well-known technologies are not described in detail. In addition, advantages and improvements that may be achieved with one or more exemplary embodiments of the present disclosure are provided for purposes of illustration only and do not limit the scope of the present disclosure, as exemplary embodiments disclosed herein may provide all or none of the above mentioned advantages and improvements and still fall within the scope of the present disclosure.

Specific dimensions, specific materials, and/or specific shapes disclosed herein are example in nature and do not limit the scope of the present disclosure. The disclosure herein of particular values and particular ranges of values for given parameters are not exclusive of other values and ranges of values that may be useful in one or more of the examples disclosed herein. Moreover, it is envisioned that any two particular values for a specific parameter stated herein may define the endpoints of a range of values that may be suitable for the given parameter (*i.e.,* the disclosure of a first value and a second value for a given parameter can be interpreted as disclosing that any value between the first and second values could also be employed for the given parameter). For example, if Parameter X is exemplified herein to have value A and also exemplified to have value Z, it is envisioned that parameter X may have a range of values from about A to about Z. Similarly, it is envisioned that disclosure of two or more ranges of values for a parameter (whether such ranges are nested, overlapping, or distinct) subsume all possible combination of ranges for the value that might be claimed using endpoints of the disclosed ranges. For example, if parameter X is exemplified herein to have values in the range of 1 - 10, or 2 - 9, or 3 - 8, it is also envisioned that Parameter X may have other ranges of values including 1 - 9, 1 - 8, 1 - 3, 1 - 2, 2 - 10, 2 - 8, 2 - 3, 3 - 10, and 3 - 9.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on,'' "engaged to," "connected to," or "coupled to" another element or layer, it may be directly on, engaged, connected, or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (*e.g*., "between" versus "directly between," "adjacent" versus "directly adjacent," *etc.).* As used herein, the term "and/or" includes any and all combinations of one or more of the associated listed items.

Although the terms first, second, third, *etc.* may be used herein to describe various elements, components, regions, layers and/or sections, these elements, components, regions, layers and/or sections should not be limited by these terms. These terms may be only used to distinguish one element, component, region, layer or section from another region, layer, or section. Terms such as "first," "second," and other numerical terms when used herein do not imply a sequence or order unless clearly indicated by the context. Thus, a first element, component, region, layer, or section discussed below could be termed a second element, component, region, layer, or section without departing from the teachings of the example embodiments.

The foregoing description of the embodiments has been provided for purposes of illustration and description. It is not intended to be exhaustive or to limit the disclosure. Individual elements, intended or stated uses, or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A system for cellular-based communications between a machine control unit and an operator control unit for remotely controlling operation of an industrial machine, wherein the system is configured to be operable such that the communication between the machine control unit and the operator control unit occurs by:
cellular communication alone that links the machine control unit and the operator control unit paired with the machine control unit; or
cellular communication and an existing radio frequency (RF) protocol that work in parallel to provide an improved uptime for communication between the machine control unit and the operator control unit paired with the machine control unit;

2. The system of claim 1, wherein the system is configured such that the operator control unit and the machine control unit are able to communicate with each other via a cellular network through a series of IOT cloud-based applications with end-to-end encrypted connectivity.

3. The system of any one of the preceding claims, wherein the operator control unit comprises an application (APP), libraries, real-time operating system (RTOS), and secure processing environment, the libraries includes an Application Event Manager (AEM) and an Internet of Things (IOT) Software Development Kit (SDK) comprising an MQTT Interface and Network Transport Layer Security (TLS) Interface.

4. The system of any one of the preceding claims, wherein the machine control unit comprises a single computer board including an application (APP), one or more libraries, and an operating system (OS)/hardware, the one or more libraries include an Internet of Things (IOT) software development kit (SDK) comprising a Queuing Telemetry Transport (MQTT) Interface and Network Transport Layer Security (TLS) Interface, the operating system (OS)/hardware includes a network stack, kernel modules, and timers.

5. The system of any one of the preceding claims, wherein the system includes a back-office application server configured to be operable for one or more of:
monitoring radio frequency (RF) packet exchange between the operator control unit and the machine control unit;
authenticating and tracking operator control units remotely; and
monitoring the operator control unit in real-time, thereby allowing operator-down events to be triggered in real time.

6. The system of any one of the preceding claims, wherein the system includes a Message Queuing Telemetry Transport (MQTT) broker configured to be operable as a central hub or intermediary that enables and/or handles the flow of messages between the operator control unit and the machine control unit.

7. The system of any one of the preceding claims, wherein the system is configured to be operable with a network latency of about 200 milliseconds to about 300 milliseconds and/or with an end-to-end packet delivery rate greater than about 99.4%.

8. The system of any one of the preceding claims, wherein:
the industrial machine is a locomotive;
the machine control unit is a locomotive control unit onboard the locomotive; and
the operator control unit is operable for remotely controlling operation of the locomotive via cellular communication with the locomotive control unit.

9. A method relating to cellular-based communication between a machine control unit and an operator control unit for remotely controlling operation of an industrial machine, wherein the method comprises using, providing, and/or enabling communication between the machine control unit and the operator control unit occurs by:
cellular communication alone that links the machine control unit and the operator control unit paired with the machine control unit; or
cellular communication and an existing radio frequency (RF) protocol that work in parallel to provide an improved uptime for communication between the machine control unit and the operator control unit paired with the machine control unit.

10. The method of claim 9, wherein the method includes:
pairing the operator control unit with machine control unit by performing Infrared (IR) link assignment between the machine control unit and the operator control unit;
programing a network module of the operator control unit by registering or provisioning a Long-Term Evolution (LTE) module of the operator control unit with an Internet of Things (IoT) gateway; and
programing a network module of the machine control unit by registering or provisioning a single board computer of the machine control unit with the Internet of Things (IoT) gateway.

11. The method of claim 9 or 10, wherein the method includes:
using the operator control unit to communicate with the machine control unit over a cellular network and over an existing radio frequency (RF) protocol working in parallel with the cellular network to thereby provide an improved uptime for communication between the machine control unit and the operator control unit; and/or
using a Message Queuing Telemetry Transport (MQTT) broker as a central hub or intermediary that enables and/or handles the flow of messages between the operator control unit and the machine control unit.

12. The method of any one of claims 9 to 11, wherein the operator control unit and the machine control unit are able to communicate with each other via a cellular network through a series of IOT cloud-based applications with end-to-end encrypted connectivity.

13. The method of any one of claims 9 to 12, wherein:
the operator control unit comprises an application (APP), libraries, real-time operating system (RTOS), and secure processing environment, the libraries includes an Application Event Manager (AEM) and an Internet of Things (IOT) Software Development Kit (SDK) comprising an MQTT Interface and Network Transport Layer Security (TLS) Interface; and/or
the machine control unit comprises a single computer board including an application (APP), one or more libraries, and an operating system (OS)/hardware, the one or more libraries include an Internet of Things (IOT) software development kit (SDK) comprising a Queuing Telemetry Transport (MQTT) Interface and Network Transport Layer Security (TLS) Interface, the operating system (OS)/hardware includes a network stack, kernel modules, and timers.

14. The method of any one of claims 9 to 13, wherein the method includes using a back-office application server for one or more of:
monitoring radio frequency (RF) packet exchange between the operator control unit and the machine control unit;
authenticating and tracking operator control units remotely; and
monitoring the operator control unit in real-time, thereby allowing operator-down events to be triggered in real time.

15. The method of any one of claims 9 to 14, wherein:
the industrial machine is a locomotive;
the machine control unit is a locomotive control unit onboard the locomotive; and
the operator control unit is operable for remotely controlling operation of the locomotive via cellular communication with the locomotive control unit.
